# EUROPEAN PATENT APPLICATION

(11) **EP 3 715 052 A1**
(43) Date of publication of application: **30.09.2020**
(21) Application number: 20157706.1
(22) Date of filing: 17.02.2020
(51) Int. Cl.: B24B 47/22, B24B 9/10, B23Q 15/16, B24B 49/16, B24B 7/24

(54) **METHOD AND DEVICE FOR THE AUTOMATIC MEASUREMENT OF TOOLS, PARTICULARLY FOR GRINDING MACHINES FOR GLASSWORKING**

(30) Priority: 27.03.2019 IT 201900004559
(71) Applicant: Neptun S.r.l., 22070 Rovello Porro CO (IT)
(72) Inventor: BAVELLONI, Stefano, 22020 San Fermo della Battaglia (CO) (IT)
(74) Representative: Modiano, Micaela Nadia

(57) **Abstract**

A method for the automatic measurement of tools, particularly for grinding machines for glassworking, comprising the steps of:
- moving a spindle adapted to support a machining tool by way of a piston-type actuator, by introducing a pressure into a rear chamber of a piston of the piston-type actuator in order to allow the spindle to perform a stroke until it touches a presetting point that has a known distance from a machining plane of a glass sheet;
- detecting a measurement defined as the difference between the stroke of the piston and the known distance;
- releasing the pressure in the rear chamber of the piston so as to allow the spindle to retrace the stroke performed previously in the reverse direction;
- moving the spindle to a level corresponding to the machining plane, so as to compensate for the wear of the tool coupled to the spindle.

## Description

The present invention relates to a method and a device for the automatic measurement of tools, particularly for grinding machines for glassworking.

More specifically, the invention relates to a method and a device for the measurement of diamond tools for grinding glass.

As is known, in grinding machines for glassworking, when diamond tools are used for the grinding of a glass sheet, such tools are inevitably subjected to wear during their use.

In order to be able to maintain the quality of machining and the correct final dimensions of the glass plates, and therefore be able to use the tools correctly, the necessity arises to periodically compensate for wear.

To this end, systems are known, both systems that are manually adjusted by cranks and screws, and systems that are motorized via electric motors or electric gear motors controlled by PLC, which actuate the tool's adjustment screw in order to execute the presetting i.e. the measuring of the length/thickness of the tool to be used for the machining.

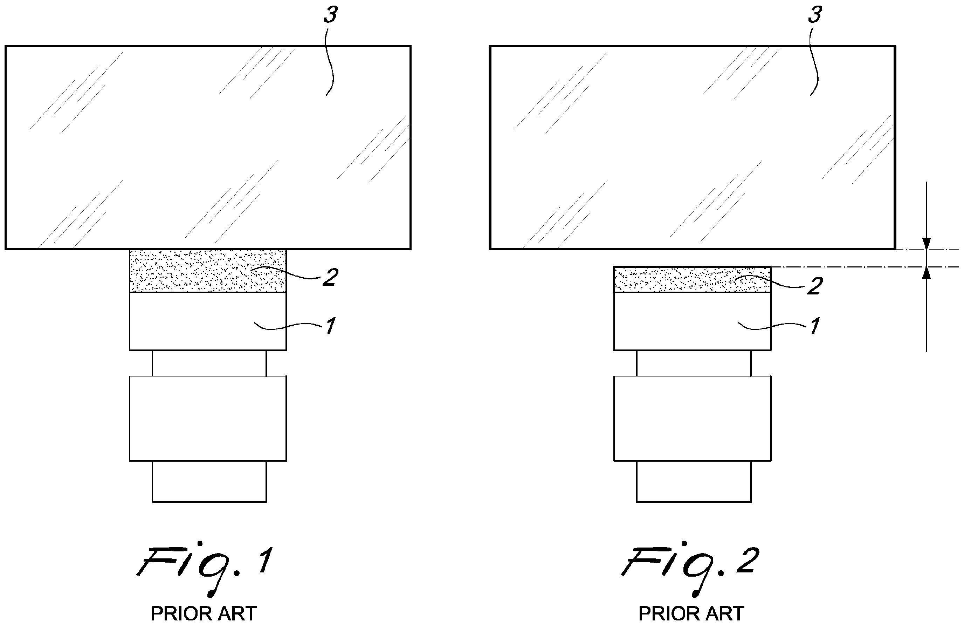

With reference to Figures 1-3, the current presetting systems are based on the principle of moving a spindle 1, which holds a tool 2, until it touches a reference point 4 at a given height (a reference height with respect to the machining plane 6 of the glass sheet 3) in order to then be repositioned in the correct working position in a desired offset position.

In order to manage the spindle and define the exact measurement of the desired position, currently instruments such as encoders, pulse motors or linear potentiometers can be used.

The drawbacks that are complained of in the solutions identified above lie mainly in the complexity of the system, in that it necessitates electric motors, systems for actuating them and corresponding wiring.

By contrast, in the manual solution, it is evident that there is a need to employ trained staff who must be on hand at the necessary time.

The aim of the present invention is to provide a method and a device for the automatic measurement of tools, particularly for grinding machines for glassworking, which reduces the complexity of the conventional solutions, while not requiring the presence of electric motors and related actuation systems with wiring.

Within this aim, an object of the present invention is to provide a method and a device for the automatic measurement of tools, particularly for grinding machines for glassworking, which makes it possible to be applied to existing apparatuses for machining glass as well.

Another object of the present invention is to provide a method and a device for the automatic measurement of tools, particularly for grinding machines for glassworking, which make it possible to compensate for the wear of tools in an extremely rapid and reliable manner.

Another object of the present invention is to provide a method and a device for the automatic measurement of tools, particularly for grinding machines for glassworking, that are highly reliable, easily and practically implemented and of low cost.

This aim and these and other objects which will become better apparent hereinafter are achieved by a method for the automatic measurement of tools, particularly for grinding machines for glassworking, which is characterized in that it comprises the steps of:
- moving a spindle adapted to support a machining tool by way of a piston-type actuator, by introducing a pressure into a rear chamber of a piston of said piston-type actuator in order to allow the spindle to perform a stroke until it touches a presetting point that has a known distance from a machining plane of a glass sheet;
- detecting a measurement defined as the difference between the stroke of said piston and said known distance;
- releasing the pressure in the rear chamber of the piston so as to allow the spindle to retrace the stroke performed previously in the reverse direction;
- moving the spindle to a level corresponding to the machining plane, so as to compensate for the wear of the tool coupled to the spindle.

Further characteristics and advantages of the invention will become better apparent from the description of a preferred, but not limiting, embodiment of the method and of the device according to the invention, illustrated by way of non-limiting example in the accompanying drawings wherein:
Figures 1 and 2 are schematic views of the conventional principle of measuring the wear of a tool being worked;
Figure 3 shows the definition, in a known manner, of a presetting point;

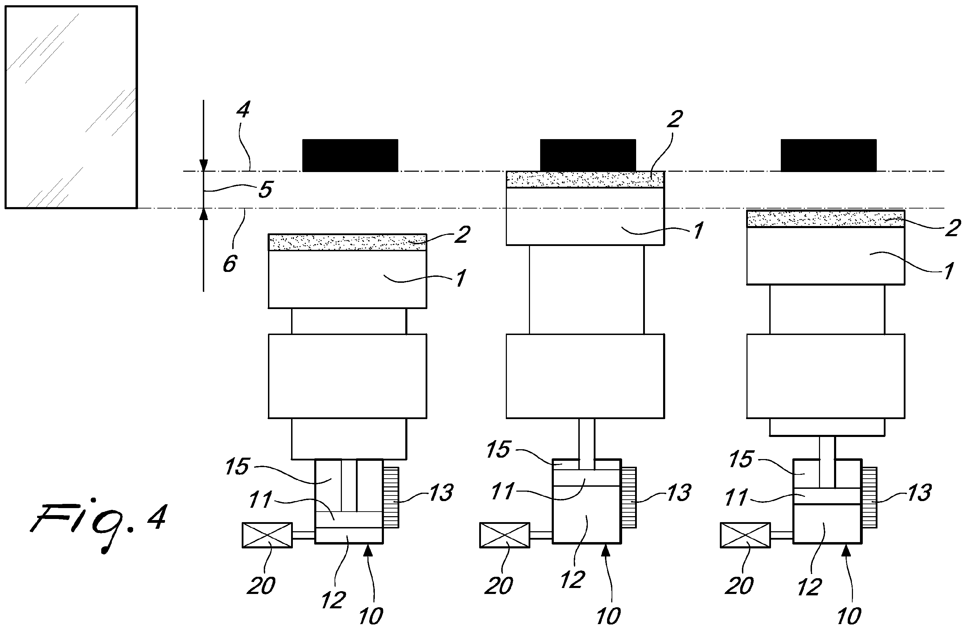

Figure 4 schematically illustrates the method and the device for the automatic measurement of the tool according to the present invention, in its three steps.

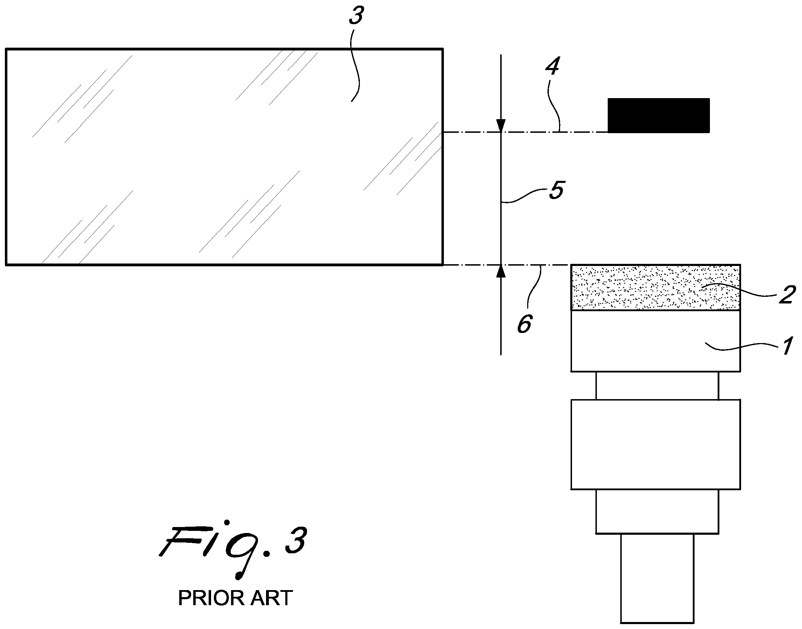

With reference to the figures, in which identical reference numerals refer to identical elements, and in particular to Figure 3, given that Figures 1 and 2 show the conventional solution, the method according to the invention, for presetting a grinding machine for glass plates 3, entails the use of a device provided so as to have the spindle 1 with a tool 2 coupled thereto, which is provided with a piston-type actuator 10 which has a piston 11 which acts in a chamber 12.

In a first step, by introducing a sufficient pressure into the rear chamber 12 of the piston 11, the spindle 1 advances and performs a stroke until it touches the presetting point 4, which has a known distance from the point of machining 6. Such distance is indicated by the reference numeral 5 as in the previous figures.

At this point a measurement is read, which is defined as the difference between the stroke and the known distance 5 from the machining plane, by way of a linear potentiometer 13, and this measurement becomes the new reference point for the spindle 1.

As soon as the measurement is stored, the pressure is released from the rear chamber 12 and the spindle 1 retraces the stroke performed previously in the reverse direction. Such stroke in the reverse direction can be performed simply by virtue of gravity if the spindle 1 is arranged in a vertical position, or by way of the introduction of pressure into a front chamber 15 of the piston 11 if the spindle 1 is arranged in other positions.

Upon reaching the level corresponding to the machining plane, i.e. the reference point 6, which has a constant value, optionally corrected by a desired material removal factor, a valve 20 is closed thus closing the circuit and locking the spindle 1 in such position, which is therefore corrected by the wear of the tool 2.

The method described above makes it possible therefore to correct the wear of the tool in an automated manner, without using electric motors, corresponding actuation systems and wiring, but simply using a piston-type actuator with a linear potentiometer and a valve for closing the circuit of the piston-type actuator.

The device used therefore has a conventional spindle 1 to which the tool 2 is applied, and is provided with a piston-type actuator 10 as previously described.

The method and the device thus conceived are susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Patent Application No. 102019000004559 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs

## Claims

1. A method for the automatic measurement of tools, particularly for grinding machines for glassworking, which is **characterized in that** it comprises the steps of:
- moving a spindle (1) adapted to support a machining tool (2) by way of a piston-type actuator (10), by introducing a pressure into a rear chamber (12) of a piston (11) of said piston-type actuator (10) in order to allow the spindle (1) to perform a stroke until it touches a presetting point (4) that has a known distance (5) from a machining plane (6) of a glass sheet (3);
- detecting a measurement defined as the difference between the stroke of said piston and said known distance (5);
- releasing the pressure in the rear chamber (12) of the piston (11) so as to allow the spindle (1) to retrace the stroke performed previously in the reverse direction;
- moving the spindle (1) to a level corresponding to the machining plane (6), so as to compensate for the wear of the tool (2) coupled to the spindle (1).

2. The method according to claim 1, **characterized in that** said step of returning the spindle (1) to the level corresponding to the machining plane (6) is performed by gravity.

3. The method according to claim 1, **characterized in that** said step of returning the spindle (1) to the level corresponding to the machining plane (6) is performed by introducing pressure into the front chamber (15) of the piston (11).

4. The method according to one or more of the preceding claims, **characterized in that** the piston (11) is maintained at the level of the machining plane (6) by closing the circuit of the piston by way of a valve (20).

5. A device for the automatic measurement of a tool, particularly for grinding machines for glassworking, which comprises a spindle (1) adapted to support a tool (2) for grinding machines for glassworking, **characterized in that** said spindle (1) comprises a piston-type actuator (10) for the measurement of the wear of the tool.

6. The device according to claim 5, **characterized in that** it comprises a linear potentiometer (13) adapted to read said measurement.

7. The device according to claim 5, **characterized in that** it comprises a valve (20) for closing the circuit of a piston (11) of said piston-type actuator (10), for the locking of said piston-type actuator (10) in a desired position that is such as to compensate the wear of the tool (2) being used for machining.
